# EUROPÄISCHE PATENTSCHRIFT

(11) **EP 1 297 390 B1**
(45) Veröffentlichungstag und Bekanntmachung des Hinweises auf die Patenterteilung: **22.12.2004**
(21) Anmeldenummer: 01936443.9
(22) Anmeldetag: 07.06.2001
(51) Int. Cl.: G05B 15/00

(54) **SYSTEM MIT MINDESTENS EINER STEUERUNGSTECHNIK UND MEHREREN SENSOREN MIT ANZEIGEEINRICHTUNGEN**
SYSTEM COMPRISING AT LEAST ONE CONTROL TECHNIQUE AND SEVERAL SENSORS WITH DISPLAY DEVICES
SYSTEME POURVU D'AU MOINS UNE TECHNIQUE DE COMMANDE ET DE PLUSIEURS CAPTEURS A DISPOSITIFS DE SIGNALISATION

(30) Priorität: 06.07.2000 DE 10032869
(43) Veröffentlichungstag der Anmeldung: 02.04.2003
(73) Patentinhaber: ABB Research Ltd., 8050 Zürich (CH)
(72) Erfinder: FUCHS, Jürgen, 68723 Schwetzingen (DE); GARRELS, Kai, 68239 Mannheim (DE); BUGGE, Jan, N-1337 Sandvika (NO); KJESBU, Snorre, N-1341 Siependen (NO); APNESETH, Christoffer, N-0263 Oslo (NO); VEFLING, Harald, N-1392 Vettre (NO); VALLESTAD, Anne, Elisabeth, N-1341 Siependen (NO)
(74) Vertreter: Miller, Toivo
(86) Internationale Anmeldenummer: PCT/EP2001/006491
(87) Internationale Veröffentlichungsnummer: WO 2002/003151

(56) Entgegenhaltungen:
- EP-A- 1 003 086
- DE-A- 19 946 858
- PATENT ABSTRACTS OF JAPAN vol. 2000, no. 12, 3. Januar 2001 (2001-01-03) & JP 2000 259974 A (NITTAN CO LTD), 22. September 2000 (2000-09-22)

## Beschreibung

Die Erfindung bezieht sich auf ein System mit mindestens einer Steuerungstechnik und mehreren Sensoren mit Anzeigeeinrichtungen gemäß dem Oberbegriff des Anspruchs 1. Die Erfindung kann insbesondere bei einem Prozessautomatisierungssystem verwendet werden.

Es ist allgemein bekannt, Sensoren mit Leuchtdioden auszustatten, um damit den aktuellen Zustand, insbesondere Schaltzustand anzuzeigen (siehe hierzu beispielsweise ABB Catalog No. 1 SAC 103699L0201, gedruckt 6/99, Seite 1.9). Derartige Diagnoseanzeigen des Sensors werden vom Sensor selbst angesteuert.

Aus der EP-A-1 003 086 sind ein Verfahren zum Überwachen und/oder Steuern von Einrichtungen sowie eine Anlage hierfür bekannt, wobei diagnostizierte Fehler in der Zentrale der Anlage angezeigt werden. An einem solchen Display wird auch der Betätigungsvorgang einer elektrischen Einrichtung optisch (beispielsweise mittels Leuchtdioden) dargestellt.

Im PATENT ABSTRACT OF JAPAN vol. 2000, no. 12, 3. Januar 2001 & JP 2000 259974 A, 22. September 2000 wird ein Testsystem für eine Vielzahl Sensoren vorgeschlagen, wobei die Testergebnisse separat für jeden einzelnen Sensor in einer Anzeigevorrichtung angezeigt werden.

In der DE 199 46 858 A wird ein System für eine Vielzahl von Sensoren vorgeschlagen, wobei eine Funkübertragung detektierter Sensorsignale von den Sensoren zu einer Zentralstation sowie eine Funkübertragung von Parametersätzen, wie vorgegebene Sensor-Schaltschwellen bzw. Schalthysteresen und/oder vorgegebene Korrekturfaktoren für unterschiedliche zu identifizierende Materialen und/oder vorgegebene Entfernungsbereiche zwischen Sensoren und zu identifizierenden Objekten von der Zentralstation zu den Sensoren erfolgt.

Der Erfindung liegt die Aufgabe zugrunde, ein System mit mindestens einer Steuerungstechnik und mehreren Sensoren mit Anzeigeeinrichtungen der eingangs genannten Art mit der Möglichkeit einer erweiterten Systemdiagnose anzugeben.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, dass mittels der vorgeschlagenen erweiterten Systemdiagnose defekte Sensoren in einfacher und schneller Weise ermittelt werden können, was die Grundlage für eine rasche Fehlerbeseitigung ist. Hierdurch werden unnötig lange Stillstandszeiten einer Anlage oder Maschine, beispielsweise eines Fertigungsautomaten, verhindert, was letztlich Kostenvorteile zur Folge hat.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig.1: ein Prozeßautomatisierungssystem mit drahtlos betriebenen Sensoren,
- Fig. 2: ein Prozeßautomatisierungssystem mit Verbindungskabeln zur Energieversorgung der Sensoren,
- Fig. 3: ein Prozeßautomatisierungssystem mit über einen Feldbus angeschlossenen Sensoren,
- Fig. 4: eine Ausführungsform zur Anordnung gemäß Fig. 2.

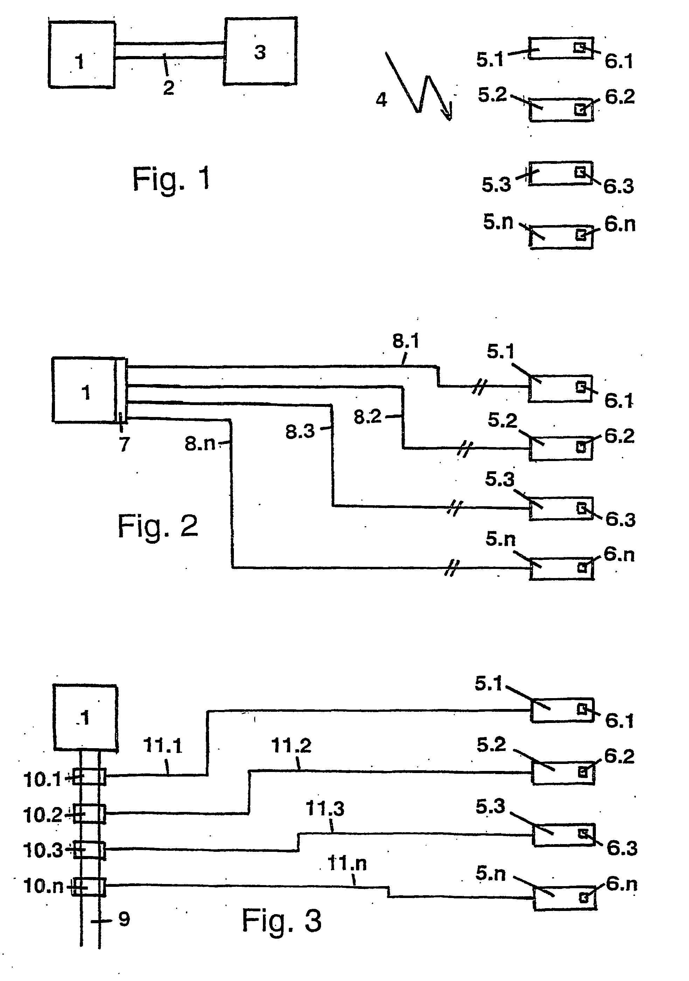

In Fig. 1 ist ein Prozeßautomatisierungssystem mit drahtlos betriebenen Sensoren dargestellt. Das Prozeßautomatisierungssystem dient zur Steuerung einer Anlage oder Maschine, insbesondere einer Fertigungsvorrichtung (Fertigungsautomat) und weist eine Steuerungstechnik 1 (prozeßnahe zentrale Automatisierungseinrichtung, speicherprogrammierbare Steuerung) auf, welche mit einer Vielzahl von Sensoren 5.1, 5.2, 5.3...5.n (n = beliebige ganze Zahl) zur Erfassung von Betriebszuständen kommuniziert. Dabei handelt es sich insbesondere um Näherungssensoren, beispielsweise um induktive, kapazitive oder photoelektrische Näherungssensoren oder um auf dem Ultraschalleffekt oder auf dem Haffeffekt beruhende Näherungssensoren. Die Kommunikation erfolgt drahtlos über eine Funkverbindung als Übertragungsmedium 4. Hierzu ist die Steuerungstechnik 1 zweckmäßig über einen Feldbus 2 mit einer Basisstation 3 verbunden. Basisstation 3 und Sensoren 5.1, 5.2, 5.3...5.n sind mit den erforderlichen Funksendern bzw. Funkempfängern versehen. Üblicherweise melden die Sensoren 5.1, 5.2, 5.3...5.n Meßergebnisse bzw. Betriebszustände (beispielsweise den Schaltzustand oder Zustand "Objekt vorhanden" oder "Objekt nicht vorhanden" eines Näherungssensors oder den Zustand "Ventil geöffnet"), was die Basis zur erforderlichen Ansteuerung von Aktoren bildet.

Die Sensoren 5.1, 5.2, 5.3...5.n sind jeweils mit mindestens einer Anzeigeeinrichtung, im allgemeinen einer Leuchtdiode 6.1, 6.2, 6.3...6.n versehen, welche üblicherweise den aktuellen Schaltzustand anzeigen. Gegebenenfalls sind Zusatzanzeigen vorgesehen, welche anzeigen, daß die Funktionsreserve des betreffenden Sensors beeinträchtigt ist (beispielsweise durch Schmutz). Derartige Überprüfungen werden durch den Sensor selbst vorgenommen und die Diagnoseanzeigen bzw. Leuchtdioden 6.1, 6.2, 6.3...6.n werden durch den Sensor selbst angesteuert.

Um eine weitergehende Systemdiagnose an den Sensoren 5.1, 5.2, 5.3...5.n zu ermöglichen, wird erfindungsgemäß vorgeschlagen, diese Leuchtdioden bzw.. allgemein Anzeigeeinrichtungen 6.1, 6.2, 6.3...6.n bedarfsweise auch durch die Steuerungstechnik 1 anzusteuern. Auf diese Weise kann die Steuerungstechnik 1 beispielsweise nach Auftreten einer Störung eine Diagnoseinformation an die Sensoren 5.1, 5.2, 5.3...5.n übertragen, welche alle Sensoren 5.1, 5.2, 5.3...5.n in der Anlage oder der Maschine oder einem bestimmten Anlagenteil veranlaßt, in einem vorgegebenen Modus zu blinken. Defekte Sensoren werden in diesem Fall nicht blinken oder in einem unterschiedlichen Modus blinken und lassen sich derart in einfacher Weise auffinden.

Desgleichen kann die Steuerungstechnik 1 eine Diagnoseinformation übertragen, welche die einzelnen Sensoren 5.1, 5.2, 5.3...5.n veranlaßt, durch unterschiedliche Blinkmuster gleichzeitig den aktuellen Zustand oder Schaltzustand anzuzeigen (d. h. je nach gerade vorliegendem Schaltzustand wird ein unterschiedliches Blinkmuster abgegeben). Durch Vergleich des durch Blinkmuster angezeigten und des vorgebbaren Soll-Zustandes oder Soll-Schaltzustandes lassen sich defekte Sensoren oder allgemein Störungen der Anlage oder Maschine lokalisieren und auffinden.

In Fig. 2 ist ein Prozeßautomatisierungssystem mit Verbindungskabeln zur Energieversorgung der Sensoren 5.1...5.n dargestellt. Die Steuerungstechnik 1 ist dabei über Mehrleiteranschlüsse 7 und zur Energieversorgung dienende Verbindungskabel 8.1, 8.2, 8.3...8.n mit den Sensoren 5.1, 5.2, 5.3...5.n verbunden. Bei dieser Ausführungsvariante werden die Sensoren 5.1...5.n während des Normalbetriebes energiemäßig unmittelbar von der Steuerungstechnik 1 gespeist, so daß es zu Diagnosezwetken in einfacher Weise möglich ist, daß die Steuerungstechnik 1 diese Energieversorgung in festgelegten EIN/AUS-Intervallen betreibt, um damit ein bestimmtes Blinkmuster der Leuchtdioden 6.1, 6.2, 6.3...6.n zu produzieren. Defekte Sensoren werden in diesem Fall nicht blinken oder mit anderem Rhythmus blinken und lassen sich derart in einfacher Weise auffinden.

In Fig. 3 ist ein Prozeßautomatisierungssystem mit über einen Feldbus angeschlossenen Sensoren dargestellt. Bei diesem Ausführungsbeispiel erfolgt die Informationsübertragung zwischen der Steuerungstechnik 1 und den Sensoren 5.1, 5.2, 5.3...5.n über einen Feldbus 9, an den die Sensoren 5.1, 5.2, 5.3...5.n über geeignete Anschlußvorrichtungen (Steckvorrichtungen) 10.1, 10.2, 10.3...10.n und zur Informationsübertragung dienende Verbindungskabel 11.1, 11.2,11.3...11.n angeschlossen sind. Wie bereits beim Ausführungsbeispiel gemäß Fig. 1 erläutert, werden die Sensoren 5.1, 5.2, 5.3...5.n bedarfsweise, d. h. zu Diagnosezwecken in bestimmter Art und Weise angesteuert (beispielsweise in einem bestimmten Blinkrhythmus), um einzelne defekte Sensoren in schneller und einfacher Weise zu ermitteln. Im Unterschied zum Ausführungsbeispiel gemäß Fig. 1 dient nicht die drahtlose Funkübertragung zur Übermittlung der Diagnoseinformation, sondern die Konfiguration Feldbus / Verbindungskabel.

Eine weitere Möglichkeit, eine von der Steuerungstechnik bewirkte Diagnoseanzeige zu realisieren, ist darin gegeben, die Energieversorgung der Anzeigeeinrichtungen der Sensoren 5.1, 5.2, 5.3...5.n umzupolen, um damit bestimmte Anzeigemuster, vorzugsweise verschiedenfarbige Anzeigen, zu produzieren. Hierzu können die entsprechenden, eine Umpolung der Energieversorgung bewirkenden Informationen drahtlos (siehe Ausführungsbeispiel gemäß Fig. 1) oder über Draht (siehe Ausführungsbeispiel gemäß Fig. 3) an die Sensoren 5.1, 5.2, 5.3...5.n übertragen werden, des weiteren ist es möglich, daß die Umpolung der Energieversorgung unmittelbar durch die Steuerungstechnik 1 erfolgt, wenn zur Energieversorgung dienende Verbindungskabel zwischen Steuerungstechnik 1 und Sensoren 5.1, 5.2, 5.3...5.n vorhanden sind (siehe Ausführungsbeispiel gemäß Fig. 2).

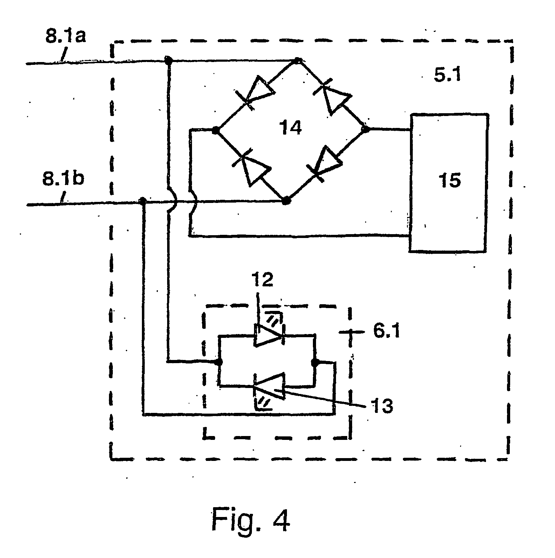

In Fig. 4 ist eine diesbezügliche Ausführungsform zur Anordnung gemäß Fig. 2 dargestellt. Zur Energieversorgung führen zwei Verbindungskabel 8.1 a und 8.1 b zum Sensor 5.1. An diese Verbindungskabel 8.1 a, 8.1 b sind ein Brückengleichrichter 14 und die Anzeigeeinrichtung 6.1 angeschlossen. Die weiteren Klemmen des Brückengleichrichters 14 sind mit der eigentlichen Sensoreinheit 15 (Sensorkopf + Sensorelektronik) verbunden. Die Anzeigeeinrichtung 6.1 besteht aus zwei antiparallel angeordneten Leuchtdioden, und zwar einer roten Leuchtdiode 12 und einer grünen Leuchtdiode 13. Je nach Polarität (positive Spannung, Nullspannung) der beiden Verbindungskabel 8.1a, 8.1b leuchtet eine der beiden Leuchtdioden 12, 13. Der Brückengleichrichter 14 entkoppelt die Polaritäten, so daß sichergestellt wird, daß die Spannungsversorgung der Sensoreinheit 15 trotz Umpolung der Verbindungskabel 8.1 a, 8.1b unverändert bleibt.

## Patentansprüche

1. System, insbesondere Prozessautomatisierungssystem, mit mindestens einer Steuerungstechnik (1) und mehreren mit dieser Steuerungstechnik kommunizierenden Sensoren (5.1...5.n), insbesondere Näherungssensoren, wobei diese Sensoren (5.1...5.n) jeweils mindestens eine Anzeigeeinrichtung (6.1...6.n), insbesondere eine Leuchtdiode aufweisen, **gekennzeichnet durch** eine bedarfsweise Aktivierung dieser Anzeigeeinrichtungen (6.1...6.n) der Sensoren (5.1...5.n) auch **durch** die Steuerungstechnik (1) zur Realisierung einer von der Steuerungstechnik bewirkten Diagnoseanzeige, so dass mittels dieser weitergehenden Systemdiagnose an den Sensoren defekte Sensoren ermittelt werden.

2. System nach Anspruch 1, wobei die Energieversorgung der Sensoren (5.1...5.n) über Mehrleiteranschlüsse (7) der Steuerungstechnik (1) erfolgt, **dadurch gekennzeichnet, dass** zur Aktivierung der Anzeigeeinrichtungen (6.1...6.n) die Energieversorgung in vorgegebenem Rhythmus eingeschaltet/ausgeschaltet wird.

3. System nach Anspruch 1, wobei die Kommunikation zwischen der Steuerungstechnik (1) und den Sensoren (5.1...5.n) über einen Feldbus (9) und Verbindungskabel (11.1...11.n) erfolgt, **dadurch gekennzeichnet, dass** die zur Aktivierung der Anzeigeeinrichtungen (6.1...6.n) erforderlichen Informationen von der Steuerungstechnik (1) zu den Sensoren (5.1...5.11) über diesen Feldbus (9) übertragen werden.

4. System nach Anspruch 1, wobei die Kommunikation zwischen der Steuerungstechnik (1) und den Sensoren (5.1...5.n) über ein drahtloses Übertragungsmedium (4) erfolgt, **dadurch gekennzeichnet, dass** die zur Aktivierung der Anzeigeeinrichtungen (6.1...6.n) erforderlichen Informationen von der Steuerungstechnik (1) zu den Sensoren (5.1...5.11) über dieses drahtlose Übertragungsmedium (4) übertragen werden.

5. System nach einem der vorstehenden Ansprüche, **dadurch gekennzeichnet, dass** zur Aktivierung der Anzeigeeinrichtungen (6.1...6.n), insbesondere zur Aktivierung verschiedenfarbiger Anzeigen, eine Umpolung ihrer Energieversorgung erfolgt.

## Claims

1. A system, especially a process automation system, with at least one control technology unit (1) and several sensors (5.1 ..... 5.n) communicating with said control technology unit, in particular proximity sensors, with said sensors (5.1 ..... 5.n) each comprising at least one display device (6.1 .... 6.n), especially a light-emitting diode, **characterized by** an activation, if required, of said display devices (6.1 .... 6.n) of the sensors (5.1 ..... 5.n) also by the control technology unit (1) for realizing a diagnostic display as caused by the control technology unit (1), so that defective sensors can be determined through said further system diagnosis on the sensors.

2. A system according to claim 1, with the power supply of the sensors (5.1 ..... 5.n) being performed. via multi-conductor connections (7) of the control technology unit (1), **characterized in that** the power supply is activated and deactivated in a predetermined rhythm for activating the display devices (6.1 ..... 6.n).

3. A system according to claim 1, with the communication between the control technology unit (1) and the sensors (5.1 ..... 5.n) occurring via a field bus (9) and connecting cables (11.1 ..... 11.n), **characterized in that** the information required for activating the display devices (6.1 .... 6.n) is transmitted by the control technology unit (1) to the sensors (5.1 ..... 5.11) via said field bus (9).

4. A system according to claim 1, with the communication between the control technology unit (1) and the sensors (5.1 ..... 5.n) occurring via a wireless transfer medium (4), **characterized in that** the information required for activating the display devices (6.1 .... 6.n) is transmitted by the control technology unit (1) to the sensors (5.1 ..... 5.11) via said wireless transfer medium (4).

5. A system according to one of the preceding claims, **characterized in that** for activating the display devices (6.1 .... 6.n), especially for activating displays of different colors, there is a pole reversal of their power supply.

## Revendications

1. Système, plus particulièrement système d'automatisme industriel, comportant au moins un ensemble de commande (1) ainsi que plusieurs détecteurs (5.1...5.n), plus particulièrement des détecteurs de proximité, qui communiquent avec l'ensemble de commande, les détecteurs (5.1...5.n) comportant chacun au moins un dispositif indicateur (6.1...6.n), en particulier une diode électroluminescente, **caractérisé par** une activation sur demande des dispositifs indicateurs (6.1...6.n) des détecteurs (5.1 ... 5.n) par l'ensemble de commande (1) également pour effectuer un affichage de diagnostic déclenché par la technique de commande (1), aux fins de détecter à l'aide de ce diagnostic système approfondi des détecteurs défectueux parmi les détecteurs.

2. Système selon la revendication 1, dans lequel l'alimentation en énergie des détecteurs (5.1...5.n) a lieu via des connecteurs multi-conducteurs (7) de l'ensemble de commande (1), **caractérisé par le fait que** pour l'activation des dispositifs indicateurs (6.1...6.n), l'alimentation en énergie est mise en service/coupée selon un rythme prédéterminé.

3. Système selon la revendication 1, dans lequel la communication entre l'ensemble de commande (1) et les détecteurs (5.1...5.n) a lieu via un bus de terrain (9) et de câbles de liaison (11.1...11.n), **caractérisé par le fait que** les informations nécessaires à l'activation des dispositifs indicateurs (6.1...6.n) sont acheminées par l'intermédiaire de ce bus de terrain (9) de l'ensemble de commande (1) jusqu'aux détecteurs (5.1...5.n).

4. Système selon la revendication 1, dans lequel la communication entre la technique de commande (1) et les détecteurs (5.1...5.n) a lieu via un moyen de transmission sans fil (4), **caractérisé par le fait que** les informations nécessaires à l'activation des dispositifs indicateurs (6.1...6.n) sont acheminées par l'intermédiaire de ce moyen de transmission sans fil (4) de l'ensemble de commande (1) jusqu'aux détecteurs (5.1 ... 5.n).

5. Système selon une des revendications précédentes, **caractérisé par le fait que** pour l'activation des dispositifs indicateurs (6.1...6.n), en particulier pour l'activation d'indicateurs de couleur différente on procède à une inversion de polarité de leur alimentation en énergie.
